# DEMANDE DE BREVET EUROPEEN

(11) **EP 3 586 611 A1**
(43) Date de publication de la demande: **01.01.2020**
(21) Numéro de dépôt: 19181895.4
(22) Date de dépôt: 24.06.2019
(51) Int. Cl.: A01J 25/12

(54) **CARROUSEL DE STOCKAGE ET LAVAGE DE MOULES**

(30) Priorité: 25.06.2018 FR 1855624
(71) Demandeur: Etablissements Chalon Megard, 01460 Montréal La Cluse (FR)
(72) Inventeur: MULIN, Norbert, 25000 Besançon (FR); BERNARD, Samuel, 01430 Ceignes (FR); CHARBON, Christophe, 01000 Bourg en Bresse (FR)
(74) Mandataire: Chevalier, Renaud Philippe

(57) **Abrégé**

Installation de préparation d'équipements de moulage de fromages pour l'industrie agroalimentaire, comprenant des balancelles (6) suspendues disposant de supports répartis verticalement recevant les équipements de moulage en vue de les stocker, et une machine de lavage (30) recevant ces balancelles (6), cette installation comportant un carrousel comprenant un rail (40) disposé en hauteur, formant une boucle fermée pouvant recevoir les balancelles espacées suivant un pas, comprenant une motorisation permettant d'avancer suivant des pas pour les rentrer dans une carcasse fermée de la machine de lavage (30) puis les sortir après le lavage.

## Description

La présente invention concerne le domaine des installations de préparation d'équipements de moulage pour l'industrie agroalimentaire.

L'invention concerne en particulier les installations de fabrication de fromages utilisant des moules et des accessoires au contact des produits travaillés, comme les moules de moulage du fromage, les couvercles de pressage, appelés foncets, ou les hausses de soutirage.

Ce type de contenant est utilisé notamment pour produire des fromages à pâtes pressées cuites, connus par exemple sous le nom de « Comté », d'« Emmental » ou d'« Abondance », des fromages à pâtes pressées demi-cuites ou non cuites, connus par exemple sous le nom de « Raclette », « Morbier », « Tomme » ou « Cantal », ou pour produire des spécialités fromagères ou tout autre type de produit utilisant des moules du type moules à fromages.

La production de ces types de fromages comporte des opérations successives réalisées quand que le lait a été transformé en un mélange de sérum et de caillé, comprenant notamment dans l'ordre :
- le moulage consistant à transférer le caillé formé après le caillage du lait, dans les moules à fromages ;
- le pressage ou l'égouttage servant à évacuer le sérum contenu dans le caillé, par des perçages formés au fond du moule ;
- le démoulage réalisant l'extraction du caillé devenu fromage hors du moule, qui permet de réaliser ensuite les opérations d'affinage ;
- le lavage des moules et selon le procédé de moulage utilisé des accessoires comme les foncets de pressage, et éventuellement le lavage des hausses de soutirage.

De manière classique les moules à fromages utilisés pour la fabrication de fromages de type à pâte pressée cuite sont constitués de plusieurs pièces assemblées, comprenant généralement un foncet inférieur qui peut être en matière plastique, une ceinture périphérique démontable réalisant le maintien d'une bande métallique latérale disposée autour du foncet inférieur, formant une virole, un premier disque métallique disposé dans cette virole et posé sur le foncet inférieur, et un second disque métallique posé sur le fromage introduit dans le moule lors de l'opération de moulage, qui est lui-même coiffé d'un foncet supérieur généralement en matière plastique, servant à appliquer la force de pressage sur le fromage.

Ce type de moule comprenant un nombre important de composants nécessite un démontage complet pour procéder à son nettoyage, suivi d'un remontage pour une nouvelle production de fromages. Ces opérations prennent un temps important, même si le lavage complet est réalisé après plusieurs tournées de fabrication de fromages dans le même moule pendant une journée.

Le nettoyage des composants de ces équipements de moulage présentant des formes simples, se fait généralement par trempage et brossage.

Les équipements de moulage à nettoyer peuvent aussi comporter des hausses de soutirage présentant une grande hauteur, utilisées pour remplir les moules par une pompe réalisant un transfert du caillé.

Pour réduire ces temps d'opérations, il est connu d'utiliser des équipements de moulage simplifiés comprenant seulement un moule creux formant le plateau inférieur et la virole de contour, et un foncet de pressage rentrant dans ce moule pour presser sur le fromage.

Ce type d'équipement de moulage réduit les temps de démontage et de remontage, mais rend plus complexe son nettoyage à cause de la forme creuse du moule, qui ne peut plus se faire simplement par trempage et brossage

De plus ce type de moule avec peu de pièces, comprenant une forme creuse plus volumineuse, présent en grand nombre dans un atelier de production, nécessite des dispositifs de transport, de lavage, et de stockage fixe ou mobile, adaptés aux quantités, qui peuvent présenter un encombrement important.

Des dispositifs de stockage présentant une capacité limitée ajoutent des manipulations nécessaires pour les charger et décharger fréquemment. En particulier pour un atelier comportant une installation de stockage et une installation de lavage distinctes, des manipulations sont nécessaires pour passer les équipements de moulage de l'une à l'autre, qui prennent du temps et ajoutent des coûts.

Par ailleurs un type d'installation de lavage connu utilisant des équipements de moulage simplifiés comporte un tunnel recevant un convoyeur sur lequel on positionne les moules et les foncets, qui réalise successivement au cours de l'avance les différentes opérations de prélavage, de lavage et de rinçage. Ce type d'installation est encombrant, nécessite en entrée et en sortie des opérations de chargement et de déchargement, et des déplacements entre ces deux opérations.

Un autre type d'installation de lavage connu, présenté notamment par le document EP-A1-3005863, comporte des rampes fixes disposées selon un axe vertical, comprenant des buses de projection de solutions de nettoyage agissant sur une balancelle rotative suspendue recevant sur plusieurs étages des équipements de moulage. On peut en particulier nettoyer par en dessous des moules présentant un creux tourné vers le bas.

Toutefois ce type d'installation de lavage nécessite des temps d'accrochage et de décrochage des équipements de moulage, et de transport pour les apporter sur cette installation et les retirer. De plus l'installation reçoit trois balancelles à chaque cycle, ce qui en prenant en compte les temps de lavage puis de rinçage nécessaires, peut ralentir la cadence des postes de moulage recevant les éléments lavés. On a aussi des problèmes de stockage des équipements de moulage avant ou après leurs nettoyages, et d'occupation du sol pour ces stockages.

On connait également le document FR2538276 qui décrit une machine industrielle de lavage à portes coulissantes, plus particulièrement destinée au lavage des claies utilisées dans l'industrie laitière pour le séchage des fromages. La machine comprend au moins une cabine de lavage dont deux parois verticales sont constituées par des portes coulissantes dont chacune est formée par deux vantaux à déplacement horizontal, actionnés par des pignons associés à une denture de crémaillère, l'espace intérieur de ladite cabine renfermant un mécanisme tournant d'aspersion comprenant des rampes verticales de projection. La machine est ainsi susceptible de laver des articles qui la traversent à l'état suspendu à un rail supérieur, les vantaux étant échancrés à cet effet.

De la même manière que précédemment, outres les problèmes de stockage des équipements de moulage avant et/ou après leurs nettoyages, et d'occupation du sol pour ces stockages, ce type de machine nécessite des temps d'accrochage et de décrochage des équipements de moulage, et de transport pour les apporter sur cette machine et les retirer.

Par ailleurs, le document FR2417345 décrit un dispositif pour le nettoyage de matériel des industries alimentaires particulièrement destiné au lavage des supports perforés utilisés dans la première phase de fabrication des fromages. Le dispositif comprend, à l'intérieur d'un tunnel, un transporteur qui est constitué par une chaîne fermée sur elle-même en une boucle renvoyée par un pignon moteur et un pignon tendeur, la chaîne étant munie d'organes d'accrochage. De part et d'autre de l'un des brins du transporteur, se trouvent des gicleurs prévus sur des rampes verticales reliées à un collecteur d'alimentation par lequel un fluide est introduit au moyen d'une pompe ou similaire.

Ce type de dispositif présente également l'inconvénient de nécessiter des temps d'accrochage et de décrochage des supports perforés, et de transport pour les apporter sur cette machine et les retirer.

De plus, le document FR2340041 décrit une installation pour la transformation de lait ultrafiltré en fromage. Ladite installation comprend des batteries de cylindres de caillage disposées à l'extérieur d'un tambour cylindrique qui tourne autour d'un axe vertical. Chaque batterie se compose de cinq cylindres de caillage verticaux, placés côte à côte en une rangée. Les batteries sont disposées en étoile à l'extérieur du tambour, donc distribuées uniformément à la circonférence du tambour, chacune étant dirigée radialement par rapport à l'axe de rotation du tambour. Chaque batterie successivement passe devant un poste de remplissage A, un poste de vidage B, un premier poste de nettoyage C prévu entre ces deux postes voisins, où chaque cylindre de caillage est rincé à l'eau, et devant un deuxième poste de nettoyage D. Au poste de nettoyage C est prévu un châssis vertical, dirigé radialement à l'axe de rotation du tambour et dans lequel peuvent se mouvoir vers le haut et vers le bas un chariot supérieur et un chariot inférieur, sous l'action respective de vérins pneumatiques qui agissent, respectivement, sur le milieu du chariot supérieur et sur un arbre monté de manière à pouvoir tourner dans le châssis. L'arbre est relié au chariot par l'intermédiaire de pattes au voisinage des deux extrémités. Le chariot supérieur présente cinq têtes de buse espacées l'une de l'autre et le chariot inférieur est muni de cinq organes d'accouplement en T orientés vers le haut et également espacés uniformément l'un de l'autre. En dessous du chariot inférieur est prévue une auge collectrice de liquide. Quand une batterie a été amenée par la rotation du tambour entre les deux chariots et que les pistons de cette batterie par leur rainure longitudinale, arrivent au-dessus-de l'organe d'accouplement correspondant du chariot inférieur, le chariot est abaissé hors de la position supérieure de sorte que les têtes de buse pénètrent, d'environ un tiers de la hauteur du cylindre de caillage, dans la batterie, tandis que le chariot inférieur s'abaisse à la position inférieure de manière à retirer complètement les pistons de la batterie correspondante. Les têtes de buse sont alimentées en eau et nettoient les cinq cylindres de caillage de la batterie. L'eau usée est recueillie dans l'auge et évacuée.

Ce type d'installation présente l'inconvénient d'être complexe et onéreuse, outres le fait qu'elle occupe une surface au sol importante. Par ailleurs, elle n'est adaptée qu'à des cylindres de caillage du lait ultrafiltré.

La présente invention a notamment pour but d'éviter ces inconvénients de la technique antérieure.

Elle propose à cet effet une installation de préparation d'équipements de moulage de fromages pour l'industrie agroalimentaire, comprenant des balancelles suspendues disposant de supports répartis verticalement recevant les équipements de moulage, et une machine de lavage recevant ces balancelles, cette installation étant remarquable en ce qu'elle comporte un carrousel comprenant un rail disposé en hauteur, formant une boucle fermée pouvant recevoir les balancelles espacées suivant un pas, comprenant une motorisation permettant d'avancer suivant des pas pour les rentrer dans une carcasse fermée de la machine de lavage puis les sortir après le lavage.

Un avantage de cette installation est de permettre à l'opérateur de rester dans une première zone restreinte de déchargement du carrousel pour extraire des balancelles les équipements de moulage propres, et les utiliser sur des postes de moulage proches en préparant les moules pour le remplissage puis en posant les foncets après ce remplissage, et à ce même opérateur de rester aussi dans une zone restreinte de chargement du carrousel où se trouve un poste de démoulage recevant les moules garnis à la fin de la phase de pressage ou d'acidification, pour procéder au démoulage des fromages puis à l'installation des équipements récupérés sur les balancelles partant vers la cabine de lavage.

De plus les stockages d'équipements avant et après lavage permis par le carrousel disposé en hauteur, associés à l'avance automatique des balancelles suivant un nombre de pas correspondant à la capacité de la machine de lavage, donnent des stocks d'équipements permettant d'éliminer les temps d'attente des opérateurs tout en occupant une place au sol réduite grâce à ces stockages en hauteur.

L'installation de préparation selon l'invention peut de plus comporter une ou plusieurs des caractéristiques suivantes, qui peuvent être combinées entre elles.

Avantageusement, la machine de lavage contient deux balancelles.

Avantageusement, la machine de lavage comporte une carcasse fermée comprenant de chaque côté une ou plusieurs portes mobiles d'obturation de l'entrée ou de la sortie de cette carcasse.

Avantageusement, la machine de lavage comporte plusieurs rampes de lavage comprenant des buses de pulvérisation de solutions, qui sont dissociées suivant les solutions de nettoyage à pulvériser.

Avantageusement, la machine de lavage comporte des rampes de lavage comprenant des buses de pulvérisation de solutions, qui sont mobiles.

Avantageusement, la machine de lavage dispose de têtes de lavage réalisant un lavage intérieur de cette machine.

Avantageusement, l'installation comporte des balancelles comprenant tous les supports qui sont fixes, et d'autres balancelles comprenant certains supports qui sont mobiles.

Dans ce cas, avantageusement les supports mobiles sont fixés sur des crochets liés aux balancelles.

De plus, en particulier les balancelles peuvent comporter deux montants verticaux parallèles, présentant pour chaque support mobile sur l'un des crochets horizontaux recevant horizontalement un côté du support mobile, et sur l'autre des crochets verticaux recevant verticalement l'autre côté du support mobile.

En particulier, toutes les balancelles peuvent recevoir trois moules et trois foncets, et les balancelles comprenant certains supports mobiles peuvent recevoir en complément et après mise en configuration deux hausses de soutirage.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est une vue en perspective d'une installation selon l'invention, comprenant sur un côté un convoyeur recevant d'une zone de déchargement du carrousel les équipements de moulage propres délivrés à des postes de moulage, et transmettant à une zone de chargement les équipements à nettoyer venant d'un poste de démoulage ;
- la figure 2 est une vue de dessus de cette installation ;
- la figure 3 est une vue d'une balancelle recevant des moules et des foncets ;
- la figure 4 est une vue de cette balancelle configurée pour recevoir des hausses de soutirage ; et
- la figure 5 est une vue en coupe verticale passant par l'axe du carrousel, de la machine de lavage de cette installation contenant deux balancelles.

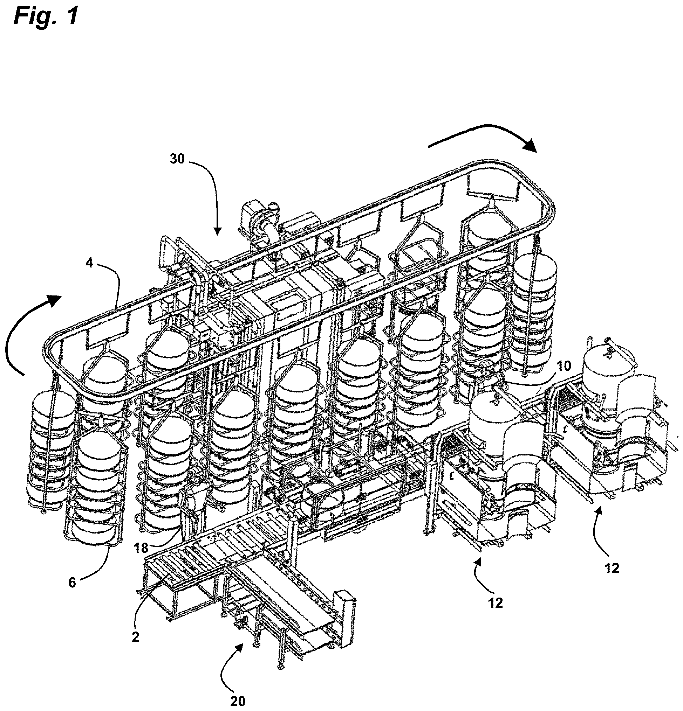

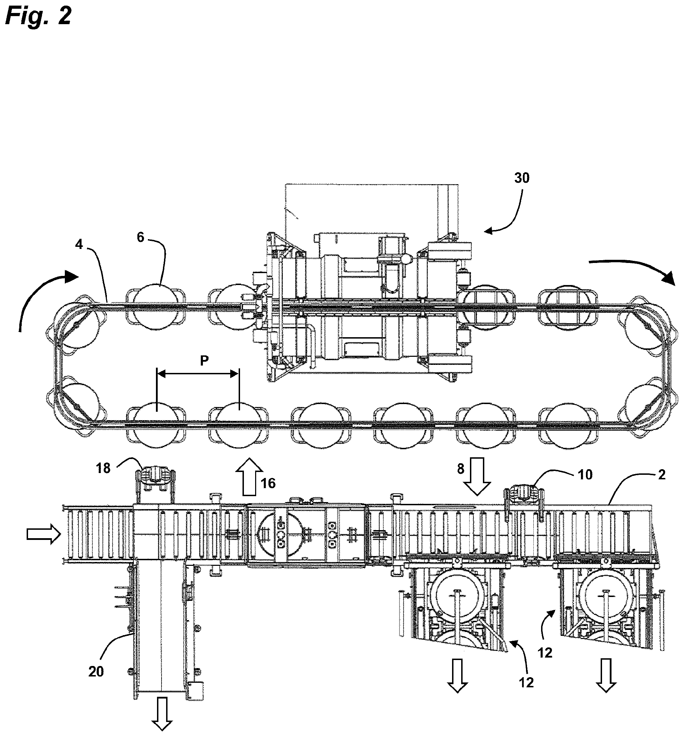

Les figures 1 et 2 présentent un convoyeur principal rectiligne à rouleaux 2, disposé parallèlement à un premier grand côté droit d'échange d'un carrousel 4 formant une boucle oblongue fermée supportant des balancelles 6 régulièrement espacées d'un pas P. Le deuxième grand côté droit de lavage comporte une machine de lavage 30 disposée au milieu de ce côté, recevant à la fois deux balancelles garnies d'équipements pour les laver en même temps.

Les deux grands côtés droits du carrousel 2 sont reliés par des courbes à 180°.

En variante le carrousel peut former un circuit fermé présentant tout autre forme, comme par exemple un circuit en « L » comprenant deux côtés parallèles circulant dans les deux directions, formant globalement une équerre. De cette manière le carrousel s'adapte à l'implantation dans l'atelier, et à la proximité d'autres postes de travail pour des départs et des arrivés de produits.

Suivant le sens du mouvement du carrousel 4, le début de son côté droit d'échange comporte une zone de déchargement de carrousel 8, où se trouve un opérateur de remplissage 10 prenant des moules lavés disposés sur les balancelles 6 derrière lui, pour les poser sur le convoyeur principal 2 devant lui, et alimenter alternativement deux postes de remplissage 12 se trouvant face à lui de l'autre côté de ce convoyeur.

Après le remplissage l'opérateur 18 dépose sur la matière dans chaque moule un foncet de pressage, puis le moule garni est évacué par un convoyeur de départ des moules partant de chaque poste de remplissage 12, qui est dans cet exemple perpendiculaire au convoyeur principal 2.

La fin du côté droit d'échange du carrousel 4 comporte une zone de chargement du carrousel 16, disposant d'un opérateur de démoulage 18 faisant face aux moules remplis sortant de phases de pressage et éventuellement d'acidification, pour démouler les fromages.

L'opérateur de démoulage 18 dépose ensuite les équipements comprenant les moules et les foncets salis sur les balancelles vides 6 se trouvant derrière lui. Après le remplissage complet du carrousel 4 un cycle de lavage est lancé, la motorisation du carrousel avance ce carrousel de deux pas à chaque fois pour laver deux balancelles 6 à chaque fois. Bien évidemment, il doit être compris au sens de la présente invention que le nombre de balancelles 6 prises en charge à chaque lavage pourra être de trois ou plus suivant la configuration de l'atelier et la capacité de stockage du carrousel.

On notera que l'opérateur se trouvant en position de moulage 10 ou de démoulage 18 travaille sur une zone réduite, ayant à sa disposition les plans de travail juste devant ou derrière lui pour réaliser ses opérations ce qui est ergonomique, et prend un minimum de place dans l'atelier.

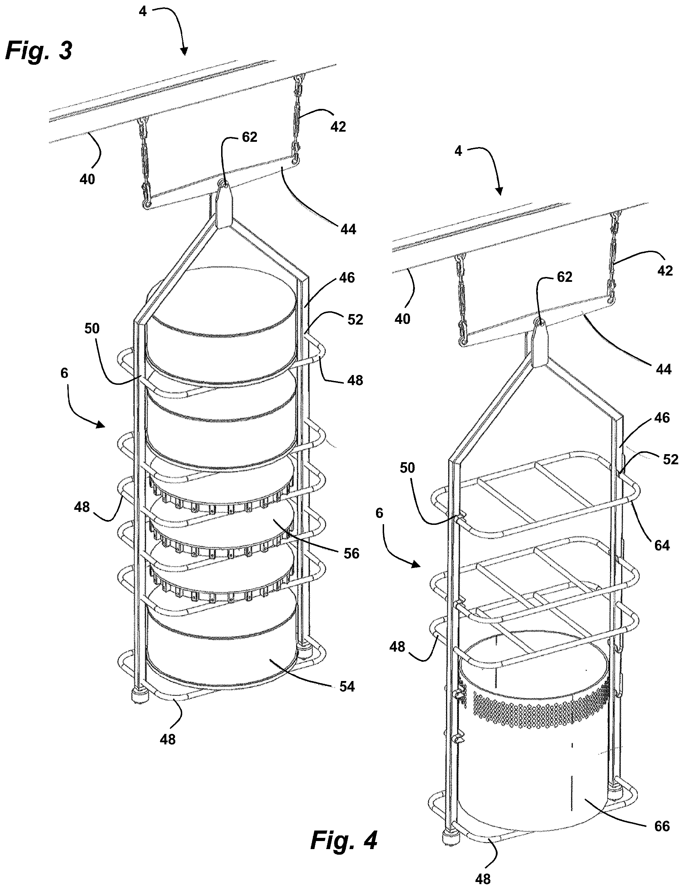

La figure 3 présente le rail 40 du carrousel 2, fixé en hauteur suivant un même plan horizontal dans l'atelier, supportant deux suspentes 42 par des roulettes intégrées dans ce rail, recevant chacun une extrémité d'un palonnier 44.

Une balancelle 6 à six supports fixes 48 comporte deux montants 46 écartés qui se rejoignent en partie supérieure pour recevoir un pivot 62 fixé au milieu du palonnier 44, présentant un axe transversal au rail 40 permettant de maintenir cette balancelle verticale pour les carrousels 4 comportant des variations de hauteur donnant des pentes au rail.

Les supports fixes 48 sont formés par une structure mécano-soudée dans un même plan comportant des barres.

Des supports 48 plus espacés reçoivent chacun un moule 54 et des supports moins espacés reçoivent chacun un foncet 56 qui est peu épais. On a successivement en partant du bas un moule 54, trois foncets 56 avec des supports 48 rapprochés, puis deux moules, les moules étant retournés pour réaliser un lavage par en-dessous.

La figure 4 présente une balancelle 6 avec en partant du bas le premier et le quatrième support 48 qui sont fixes, les autres étant des supports mobiles 64.

Les supports mobiles 64 comportent chacun sur un côté deux barres présentant des extrémités qui viennent de chaque côté d'un premier montant 46, pour s'ajuster suivant la direction horizontale en venant du centre de la balancelle 6, chacune dans un crochet horizontal 50 comprenant une butée de fin de course.

L'autre côté des supports mobiles 64 comporte de la même manière des extrémités de deux barres qui viennent de chaque côté du deuxième montant 46, pour s'ajuster chacune en descendant dans un crochet vertical 52. De manière simple et rapide, par un mouvement horizontal d'un côté puis vertical de l'autre on fixe les supports mobiles 64 à différentes hauteurs sur les balancelles.

Les deux supports mobiles du bas 64 ont été retirés, afin de positionner une hausse de soutirage 66 présentant une hauteur importante. On peut aussi retirer les deux supports mobiles du haut 64 pour disposer en hauteur une deuxième hausse 66.

De cette manière on peut en fin de journée faire une succession de cycles de lavage des hausses 66, avec à chaque fois une commande d'avance du carrousel 4 de deux pas afin d'entrer deux balancelles 6 à la fois dans la machine de lavage 30, recevant chacune une hausse.

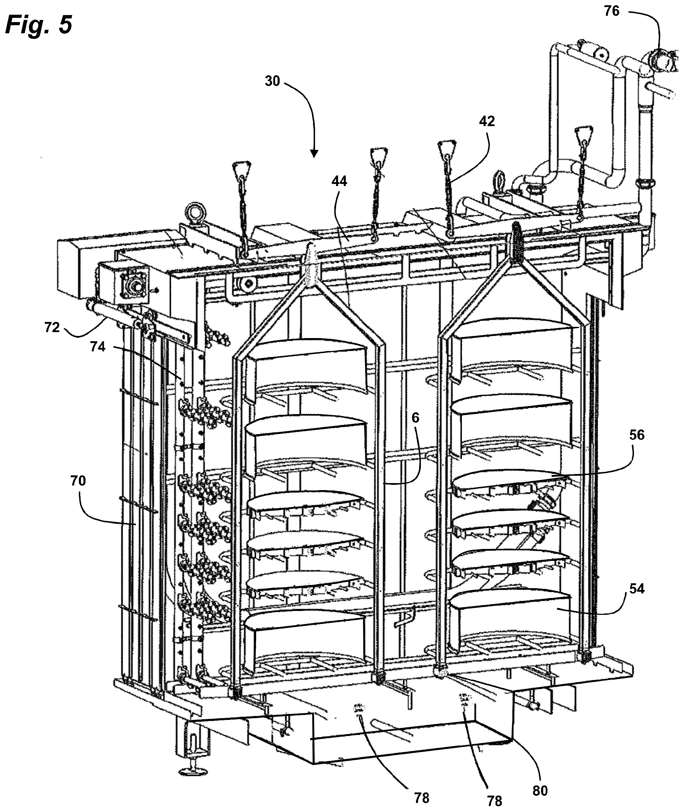

La figure 5 présente la machine de lavage 30 posée à un niveau inférieur dans une fosse, afin de conserver le rail du carrousel 4 dans un même plan horizontal, avec des balancelles 6 restant à la même hauteur.

La machine de lavage 30 comporte une carcasse fermée comprenant de chaque côté une porte d'entrée et de sortie 70 manoeuvrées chacune par un vérin 72, permettant de fermer l'espace de lavage afin d'éviter les projections extérieures, et sécuriser les zones proches en évitant des sols glissants.

Les balancelles 6 rentrent deux par deux en restant accrochés au carrousel 4, pour recevoir les solutions de nettoyage ou l'eau de rinçage par des rampes mobiles 74 reliées à une alimentation extérieure 76, comprenant des buses de pulvérisation 78 permettant de projeter les produits latéralement et en dessous des moules retournés et des foncets 56.

En particulier la machine de lavage 30 dispose de rampes mobiles de pulvérisation 74 comportant des accessoires permettant la projection des solutions, qui sont dissociées en fonction de l'étape de nettoyage. Les rampes mobiles 74 dédiées aux phases de prélavage et de lavage disposent de buses 78 visant à obtenir une puissance de pulvérisation importante pour permettre un décollage de la matière organique présente sur les moules 54 et les foncets de pressage 56, alors que les rampes dédiées à la phase de rinçage sont garnies de buses permettant de limiter la consommation d'eau.

Les rampes mobiles 74 réalisent des mouvements alternatifs pour effectuer les lavages complets. La machine de lavage 30 comporte un bac de récupération des produits de nettoyage 80, et un bac de stockage de ces produits.

De plus, la machine de lavage comporte des têtes de lavage en partie haute et basse qui réalisent un auto-lavage intérieur de cet équipement, les têtes de lavage inférieures servant en outre à réaliser le lavage puis le rinçage des hausses de soutirage 66.

En variante dans le cas où une fosse n'est pas réalisable, la machine de lavage 30 peut être posée au niveau du sol, avec un carrousel 4 présentant une partie plus élevée au niveau de cette machine afin de passer les balancelles 6 au-dessus du bac de récupération 80.

Un exemple de fonctionnement d'un atelier de fabrication avec ce type d'installation est le suivant. La mise en route s'effectue le matin par le remplissage de cuves de fabrication avec du lait, la mise en chauffe de ce lait puis sa transformation dans ces cuves. Durant cette phase d'une heure trente à deux heures, l'opérateur généralement seul démoule les fromages de la veille en chargeant le carrousel 4 avec les moules salis, puis lance en lavage le carrousel complet à la fin de son chargement. Les moules sont ainsi lavés et prêts à l'emploi pour le premier moulage du jour.

Concernant le dispositif de moulage, deux procédés peuvent être utilisés. Le transfert du caillé par le vide depuis les cuves de fabrication, dans ce cas on n'utilise pas de hausse de soutirage, et on prévoit seulement les balancelles 6 présentées figure 3 n'accueillant que les moules 54 et les foncets 56. Ou un transfert avec une pompe par un bac de soutirage, en utilisant les hausses de soutirage 66, dans ce cas on prévoit les balancelles 6 présentées figure 4 pouvant accueillir de plus les hausses après le démontage de certains supports mobiles 64.

## Revendications

1. Installation de préparation d'équipements de moulage de fromages (54, 56) pour l'industrie agroalimentaire, comprenant des balancelles (6) suspendues disposant de supports (48, 64) répartis verticalement recevant les équipements de moulage (54, 56), et une machine de lavage (30) recevant ces balancelles (6), **caractérisée en ce qu'**elle comporte un carrousel (4) comprenant un rail (40) disposé en hauteur, formant une boucle fermée pouvant recevoir les balancelles (6) espacées suivant un pas (P), comprenant une motorisation permettant d'avancer suivant des pas (P) pour les rentrer dans une carcasse fermée de la machine de lavage (30) puis les sortir après le lavage.

2. Installation selon la revendication 1, **caractérisée en ce que** la machine de lavage (30) contient deux balancelles (6).

3. Installation selon la revendication 1 ou 2, **caractérisée en ce que** la machine de lavage (30) comporte une carcasse fermée comprenant de chaque côté une ou plusieurs portes mobiles (70) d'obturation de l'entrée ou de la sortie de cette carcasse.

4. Installation selon l'une quelconque des revendications précédentes, **caractérisée en ce que** la machine de lavage (30) comporte plusieurs rampes de lavage (74) comprenant des buses de pulvérisation de solutions (78), qui sont dissociées suivant les solutions de nettoyage à pulvériser.

5. Installation selon l'une quelconque des revendications précédentes, **caractérisée en ce que** la machine de lavage (30) comporte des rampes de lavage (74) comprenant des buses de pulvérisation de solutions (78), qui sont mobiles.

6. Installation selon l'une quelconque des revendications précédentes, **caractérisée en ce que** la machine de lavage (30) dispose de têtes de lavage réalisant un lavage intérieur de cette machine (30).

7. Installation selon l'une quelconque des revendications précédentes, **caractérisée en ce qu'**elle comporte des balancelles (6) comprenant tous les supports qui sont fixes (48), et d'autres balancelles (6) comprenant certains supports qui sont mobiles (64).

8. Installation selon la revendication 7, **caractérisée en ce que** les supports mobiles (64) sont fixés sur des crochets (50, 52) liés aux balancelles (6).

9. Installation selon la revendication 8, **caractérisée en ce que** les balancelles (6) comportent deux montants verticaux parallèles (46), présentant pour chaque support mobile (64) sur l'un des crochets horizontaux (50) recevant horizontalement un côté du support mobile (48), et sur l'autre des crochets verticaux (52) recevant verticalement l'autre côté du support mobile (64).

10. Installation selon l'une quelconque des revendications 7 à 9, **caractérisée en ce que** toutes les balancelles (6) peuvent recevoir trois moules (54) et trois foncets (56), et les balancelles (6) comprenant certains supports mobiles (64) peuvent recevoir en complément et après mise en configuration deux hausses de soutirage (66).
